# FASCICULE DE BREVET EUROPEEN

(11) **EP 3 268 255 B1**
(45) Date de publication et mention de la délivrance du brevet: **25.10.2023**
(21) Numéro de dépôt: 16713513.6
(22) Date de dépôt: 15.02.2016
(51) Int. Cl.: B60W 20/00, B60K 6/448, B60K 6/52, B60K 17/356, B60K 23/08, B60W 10/06, B60W 10/08, B60W 30/02, B60W 50/00

(54) **PROCÉDÉ DE RÉPARTITION DE COUPLE ENTRE LES TRAINS DE ROUES D'UN VÉHICULE AUTOMOBILE**
VERFAHREN ZUR VERTEILUNG DES DREHMOMENTS ZWISCHEN DEN RADSÄTZEN EINES KRAFTFAHRZEUGS
METHOD FOR DISTRIBUTING TORQUE BETWEEN THE WHEELSETS OF A MOTOR VEHICLE

(30) Priorité: 10.03.2015 FR 1551986
(43) Date de publication de la demande: 17.01.2018
(73) Titulaire: PSA Automobiles SA, 78300 Poissy (FR)
(72) Inventeur: MILHAU, Yohan, 78400 Chatou (FR); METRARD, Francois, 78120 Rambouillet (FR); BARDET, Arnaud, 78150 Le Chesnay (FR)
(86) Numéro de dépôt international: PCT/FR2016/050339
(87) Numéro de publication internationale: WO 2016/142596

(56) Documents cités:
- DE-A1-102008 041 897
- DE-A1-102011 005 962
- FR-A1- 2 911 568
- FR-A1- 3 005 918

## Description

La présente invention se rapporte à un procédé de répartition de couple entre les trains de roues d'un véhicule automobile.

L'invention s'applique notamment aux véhicules hybrides à quatre roues motrices disposant de plusieurs moteurs qui entraînent de façon indépendante les trains avant et arrière du véhicule.

Un véhicule hybride comprend au moins un moteur thermique et au moins une autre machine de traction, telle qu'un moteur électrique. D'autres types de machines de traction peuvent également être envisagés, tels qu'une machine hydraulique ou encore à air comprimé.

L'invention s'applique plus généralement aux véhicules comportant deux trains de roues motrices dont l'entraînement peut être commandé de manière indépendante. Dans un tel véhicule, un procédé de répartition de couple permet de commander le niveau de couple d'entraînement qui doit être appliqué sur chacun des trains de roues du véhicule.

On connaît du document FR-A1-3 005 921 un procédé de répartition de couple entre le train avant et le train arrière d'un véhicule hybride comportant une limitation du couple sur le train arrière pour assurer la stabilité du véhicule.

Un tel procédé a comme inconvénient que dans certaines situations de vie, le couple global appliqué sur les trains avant et arrière ne correspond pas à la demande de couple du conducteur du véhicule et peut notamment être supérieur à cette demande, ce qui peut occasionner une accélération intempestive du véhicule.

D'autres procédés de répartition de couple entre le train avant et le train arrière d'un véhicule hybride sont connus de FR 2 911 568 A1 et de DE 10 2008 041897 A1.

L'invention a pour but de remédier aux inconvénients de l'art antérieur.

Dans ce but, la présente invention propose un procédé de répartition d'un couple global de consigne entre un premier train de roues et un deuxième train de roues d'un véhicule, le procédé consistant à effectuer par itérations successives :
- dans une première branche, une étape consistant à soustraire au couple global de consigne un couple optimal associé au deuxième train, de façon à obtenir un premier couple de consigne à appliquer au premier train ;
- dans une deuxième branche, des étapes consistant à :
- soustraire au couple global de consigne un couple estimé associé au premier train, de façon à obtenir un deuxième couple de consigne à appliquer au deuxième train, puis
- limiter le deuxième couple de consigne entre un couple minimum et un couple maximum prédéfinis ;
le procédé étant remarquable en ce que la première branche comporte en outre une étape consistant à limiter le couple optimal entre le couple minimum et le couple maximum définis précédemment avant de calculer ledit premier couple.

Ainsi, l'invention permet que la somme des couples appliqués sur chacun des premier et deuxième trains de roues du véhicule corresponde à la consigne de couple globale demandée par le conducteur du véhicule, tout en assurant la stabilité du véhicule.

Selon une caractéristique particulière, à chacune des itérations, les étapes de la première branche sont effectuées avant les étapes de la deuxième branche.

Selon une caractéristique particulière, chacun de ces couples minimum et maximum est défini en fonction du couple global.

Selon une caractéristique particulière, la valeur du couple minimum, respectivement du couple maximum, lorsque le couple global est négatif, est inférieure à la valeur du couple minimum, respectivement du couple maximum, lorsque le couple global est positif.

L'invention concerne aussi un véhicule automobile comportant un premier train de roues entraîné par un premier moteur et un deuxième train des roues entraîné par un deuxième moteur, ce véhicule comportant des moyens de commande adaptés pour mettre en oeuvre un tel procédé.

Selon une caractéristique particulière, le premier moteur est un moteur thermique et le deuxième moteur est un moteur électrique.

Selon une caractéristique particulière, le premier train de roues est le train avant du véhicule et le deuxième train de roues est le train arrière du véhicule.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
- la figure 1 présente schématiquement un mode particulier de réalisation d'un véhicule conforme à l'invention, comprenant une chaîne de traction et un calculateur de gestion de cette chaîne de traction ;
- la figure 2 est un logigramme illustrant des étapes d'un procédé de répartition de couple entre les trains de roues d'un véhicule, dans un mode particulier de réalisation de l'invention ; et
- la figure 3 est un graphique présentant un exemple de cartographie de limitation du couple sur un train de roues du véhicule en fonction du couple global sur l'ensemble des trains de roues, conformément à l'invention.

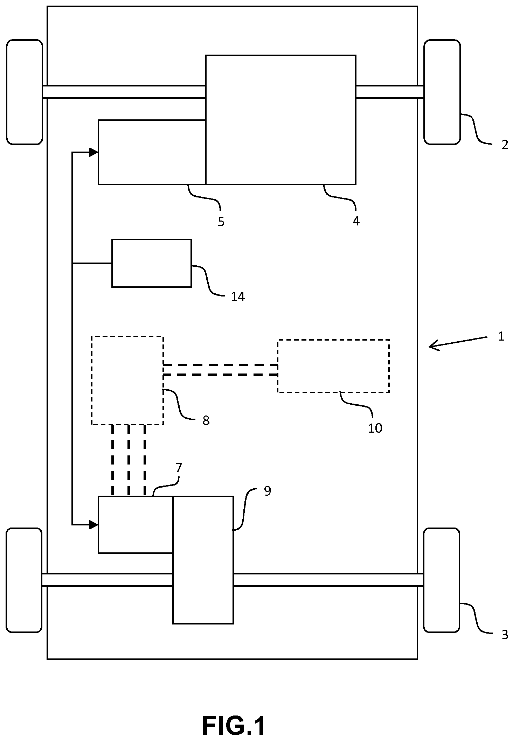

Dans ce qui suit, on considère, à titre d'exemple non limitatif, un véhicule automobile du type d'un véhicule 1 illustré par la figure 1.

La figure 1 présente le véhicule 1 comportant une chaîne de traction et un calculateur 14 de gestion de la chaîne de traction.

La chaîne de traction du véhicule 1 comprend un premier moteur 5 de traction associé à une première transmission 4 et un deuxième moteur 7 de traction associé à une deuxième transmission 9.

Par exemple, la première transmission 4 est chargée d'entraîner en rotation le train de roues avant 2 du véhicule 1, tandis que la seconde transmission 9 est chargée d'entraîner en rotation le train de roues arrière 3 du véhicule 1. Mais l'inverse est également possible.

Le premier moteur 5 est par exemple un moteur thermique.

On notera que la première transmission 4 peut être automatisée ou non. Par conséquent, il pourra s'agir d'une boîte automatique, d'une boîte de vitesses manuelle pilotée ou non, ou d'une boîte de vitesses à double embrayage (ou DCT), ou encore d'une transmission à variation continue (ou CVT).

Par ailleurs, on considère dans ce qui suit, à titre d'exemple non limitatif, que le deuxième moteur 7 est de type moteur électrique. Mais l'invention n'est pas limitée à ce type de moteur. Ainsi, elle concerne également les machines (ou moteurs) hydrauliques ou à air comprimé, dès lors qu'elles permettent de récupérer de l'énergie, par exemple lors de décélérations du véhicule 1.

Ce deuxième moteur 7 étant, dans l'exemple retenu pour la présentation de l'invention, un moteur électrique, il est connecté à un convertisseur de puissance 8 (ou onduleur) pour échanger de l'énergie avec un dispositif de stockage d'énergie électrique 10, par exemple de type batterie basse tension, telle qu'une batterie 220 Volt.

La deuxième transmission 9 peut comprendre une ou plusieurs démultiplications ainsi qu'un ou plusieurs moyens de couplage et de découplage du deuxième moteur 7 au/du train de roues arrière 3.

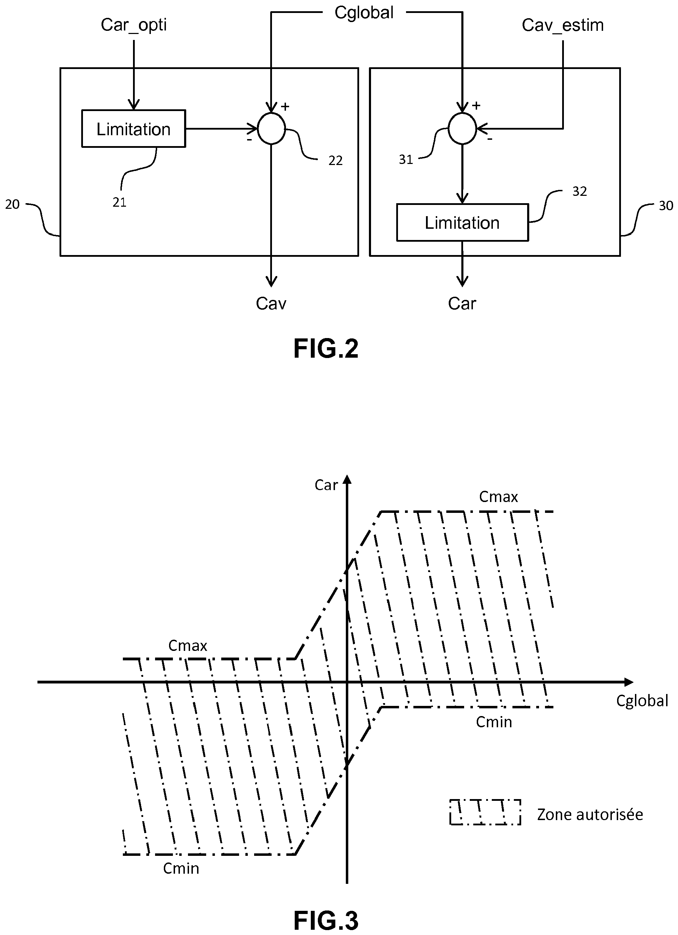

La figure 2 est un logigramme présentant des étapes d'un procédé de répartition conforme à l'invention, pouvant être mis en oeuvre dans le véhicule 1, pour la répartition d'un couple global Cglobal à appliquer entre les trains de roues avant 2 et arrière 3 du véhicule 1.

Un tel procédé peut être mis en oeuvre par le calculateur 14 de gestion de la chaîne de traction, mais cela n'est pas obligatoire. En variante, ce procédé pourrait en effet être mis en oeuvre par un autre équipement, directement ou indirectement, couplé à ce calculateur 14. Ce procédé peut être mis en oeuvre par des modules logiciels (ou informatiques ou encore « software »), ou par une combinaison de circuits électroniques (ou « hardware ») et de modules logiciels.

Le procédé de répartition consiste à effectuer par itérations successives :
- dans une première branche 20, des opérations pour calculer le couple sur le train avant 2 ; et
- dans une deuxième branche 30, des opérations pour calculer le couple sur le train arrière 3.

La première branche 20 reçoit en entrée le couple global Cglobal à appliquer à l'ensemble des trains de roues avant 2 et arrière 3 du véhicule et un couple optimal Car_opti à appliquer sur le train arrière 3. A chaque itération du procédé selon l'invention, les opérations de la première branche 20 sont effectuées avant les étapes de la deuxième branche 30.

Le couple global Cglobal est une consigne de couple qui est déterminée au moyen d'une interface, connue en soi et non illustrée, avec le conducteur du véhicule. Cette interface peut notamment comprendre une pédale de frein, une pédale d'accélération, un levier de vitesses, ou des boutons pour le choix d'un mode de fonctionnement du véhicule. Le couple global Cglobal peut en outre dépendre de la vitesse du véhicule.

Le couple optimal Car_opti est une consigne de couple à appliquer sur le train arrière 3. Le couple Car_opti peut par exemple être obtenu en appliquant un coefficient de répartition sur le couple global Cglobal, ou bien de façon à optimiser le rendement énergétique par des méthodes issues de l'art antérieur. D'autres contraintes peuvent également être prises en compte pour définir le couple optimal Car_opti, telles que des contraintes liées à des passages de jeux ou à des consignes venant d'un calculateur ESP (de l'anglais « Electronic Stability Program ») d'assistance à la stabilité du véhicule.

La première branche 20 comporte étape de limitation 21 et une étape de calcul 22.

L'étape de limitation 21 consiste à limiter la valeur du couple optimal Car_opti entre un couple minimal Cmin et un couple maximal Cmax prédéfinis. Les valeurs Cmin et Cmax peuvent par exemple être définies par une cartographie, ainsi que détaillé plus loin (cf. figure 3).

Cette étape de limitation 21 est suivi d'une étape de calcul 22 qui consiste à calculer le couple avant Cav de consigne, destiné au pilotage de la première transmission 4 et du premier moteur 5, par soustraction du couple optimal Car_opti au couple global Cglobal de consigne.

A la suite de l'étape de calcul 22, d'autres contraintes (non illustrées) peuvent également être prises en compte pour limiter le couple avant Cav de consigne, telles que des contraintes liées à des passages de jeux, à des consignes venant du calculateur ESP, ou à des limitations propres au premier moteur 5 (limitations propres à éviter l'émission de fumées par exemple).

Ainsi, le couple avant Cav de consigne est calculé en prenant en compte l'ensemble des limitations qui sont appliquées sur le couple optimal Car_opti et sur les organes entraînant le train de roues avant 2.

La deuxième branche 30 reçoit en entrée le couple global Cglobal déjà décrit et un couple estimé Cav_estim appliqué sur le train avant 2.

Le couple estimé Cav_estim peut par exemple être calculé à partir d'informations issues d'un calculateur chargé de la commande rapprochée du premier moteur 5 ou bien en prenant la dernière valeur connue du couple avant Cav de consigne.

La deuxième branche 30 comporte une étape de calcul 31 et une étape de limitation 32.

L'étape de calcul 31 consiste à calculer le couple arrière Car de consigne par soustraction du couple estimé Cav_estim au couple global Cglobal.

L'étape de limitation 32 consiste à limiter la valeur du couple arrière Car de consigne entre le couple minimal Cmin et le couple maximal Cmax prédéfinis, pour obtenir le couple arrière Car de consigne destiné au pilotage de la deuxième transmission 9 et du deuxième moteur 7.

Conformément à l'invention, le couple minimal Cmin, respectivement le couple maximal Cmax, utilisé dans la première étape 21 de limitation est égal au couple minimal Cmin, respectivement le couple maximal Cmax, utilisé lors de la deuxième étape 32 de limitation.

A la suite de la deuxième étape 32 de limitation, d'autres contraintes (non illustrées) peuvent également être prises en compte pour limiter le couple arrière Car de consigne, telles que des contraintes liées à des passages de jeux ou à des consignes venant du calculateur ESP.

La figure 3 représente sur un graphique un exemple de cartographie permettant de définir les courbes correspondant aux couples Cmin et Cmax, utilisés dans les étapes de limitation 21 et 32, en fonction du couple global Cglobal.

La zone hachurée située entre la courbe de couple minimal Cmin et la courbe de couple maximal Cmax correspond à une zone autorisée pour la valeur du couple arrière Car de consigne.

On peut observer que la zone autorisée est définie de façon à assurer une cohérence entre le signe du couple global Cglobal et du couple arrière Car. Les couples Cglobal et Car sont généralement exprimés en N.m, dans un référentiel lié au roues du véhicule.

Ainsi, les Cmin et Cmax sont définis de façon que la surface des zones autorisées avec un signe opposé pour Cglobal et Car soit minimisée :
- la valeur du couple minimum Cmin lorsque le couple global Cglobal est négatif est inférieure à la valeur du couple minimum Cmin lorsque le couple global Cglobal est positif ; et
- la valeur du couple maximum Cmax lorsque le couple global Cglobal est négatif est inférieure à la valeur du couple maximum Cmax lorsque le couple global Cglobal est positif.

Le couple minimum Cmin peut être défini :
- égal à une constante Cmin1, par exemple comprise entre -5000 et -3000 N.m, pour les valeurs de couple global Cglobal inférieures à un premier seuil Cglobal_1 négatif, par exemple compris entre -200 et -50 N.m ;
- égal à une constante Cmin2 supérieure à Cmin1, par exemple comprise entre -200 et 0 N.m, pour les valeurs de couple global Cglobal supérieures à un deuxième seuil Cglobal_2 positif, par exemple compris entre 50 et 200 N.m ; et
- varie linéairement entre le premier seuil Cglobal_1 et le deuxième seuil Cglobal_2.

De façon analogue, le couple maximum Cmax peut être défini :
- égal à une constante Cmax1, par exemple comprise entre 50 et 200 N.m, pour les valeurs de couple global Cglobal inférieures au premier seuil Cglobal_1 négatif ;
- égal à une constante Cmax2 supérieure à Cmax1, par exemple comprise entre 3000 et 5000 N.m, pour les valeurs de couple global Cglobal supérieures au deuxième seuil Cglobal_2 positif ; et
- varie linéairement entre le premier seuil Cglobal_1 et le deuxième seuil Cglobal_2.

L'application numérique qui suit, du procédé de répartition de l'invention sur un point particulier de fonctionnement du véhicule, permet de mieux comprendre son fonctionnement.

On considère par exemple que le couple global Cglobal de consigne est égal à 1000 N.m et que le couple optimal Car_opti de consigne sur le train arrière est égal à -200 N.m.

Considérons que pour un couple global Cglobal égal à 1000 N.m, le couple minimum Cmin est égal à -100 N.m. Lors de l'étape de limitation 21 de la première branche 20 le couple optimal Car_opti est donc limité à -100 N.m. L'opération effectuée lors de l'étape de calcul 22 de la première branche 20, donne alors un couple avant Cav de consigne égal à 1100 N.m (1000 N.m - (-100 N.m)).

En prenant pour valeur du couple estimé Cav_estim la valeur du couple avant Cav de consigne, l'étape de calcul 31 de la deuxième branche 30 donne alors un couple arrière Car égal à -100 N.m (1000 N.m - 1100 N.m). Lorsqu'on effectue la deuxième étape de limitation 32 de la deuxième branche 30, le couple arrière Car de consigne est donc égal à -100 N.m. Cette valeur est cohérente avec celle du couple global Cglobal, ce qui permet d'assurer la stabilité du véhicule.

On vérifie donc que la somme des couples avant et arrière Cav et Car est bien égale au couple global Cglobal de consigne, soit 1000 N.m. L'invention permet donc de respecter la consigne de couple global Cglobal au niveau de l'ensemble des trains de roues, ce qui permet d'éviter une accélération intempestive du véhicule.

Ainsi, la mise en oeuvre d'un tel procédé permet que la somme des couples appliqués sur chacun des trains de roues du véhicule corresponde à la consigne de couple globale demandée par le conducteur du véhicule, tout en assurant la stabilité du véhicule.

## Revendications

1. Procédé de répartition d'un couple global (Cglobal) de consigne entre un premier train de roues (2) et un deuxième train de roues (3) d'un véhicule (1), le procédé consistant à effectuer par itérations successives :
- dans une première branche (20), une étape consistant à soustraire (22) audit couple global (Cglobal) de consigne un couple optimal (Car_opti) associé audit deuxième train (3), de façon à obtenir un premier couple de consigne (Cav) à appliquer audit premier train (2) ;
- dans une deuxième branche (30), des étapes consistant à :
- soustraire (31) audit couple global (Cglobal) de consigne un couple estimé (Cav_estim) associé audit premier train (2), de façon à obtenir un deuxième couple de consigne (Car) à appliquer audit deuxième train (3), puis
- limiter (32) ledit deuxième couple de consigne (Car) entre un couple minimum (Cmin) et un couple maximum (Cmax) prédéfinis ;
le procédé étant **caractérisé en ce que** ladite première branche (20) comporte en outre une étape consistant à limiter (21) ledit couple optimal (Car_opti) entre ledit couple minimum (Cmin) et ledit couple maximum (Cmax) avant de calculer ledit premier couple (Cav).

2. Procédé selon la revendication 1, **caractérisé en ce que**, à chacune des itérations, les étapes de ladite première branche (20) sont effectuées avant les étapes de ladite deuxième branche (30).

3. Procédé selon la revendication 1 ou 2, **caractérisé en ce que** chacun desdits couples minimum (Cmin) et maximum (Cmax) est défini en fonction dudit couple global (Cglobal).

4. Procédé selon la revendication 3, **caractérisé en ce que** la valeur dudit couple minimum (Cmin), respectivement dudit couple maximum (Cmax), lorsque ledit couple global (Cglobal) est négatif, est inférieure à la valeur dudit couple minimum (Cmin), respectivement dudit couple maximum (Cmax), lorsque ledit couple global (Cglobal) est positif.

5. Véhicule automobile (1) comportant un premier train de roues (2) entraîné par un premier moteur (5) et un deuxième train de roues (3) entraîné par un deuxième moteur (7), **caractérisé en ce qu'**il comporte des moyens (14) de commande adaptés pour mettre en oeuvre un procédé selon l'une quelconque des revendications précédentes.

6. Véhicule (1) selon la revendication 5, **caractérisé en ce que** ledit premier moteur (5) est un moteur thermique et **en ce que** ledit deuxième moteur (7) est un moteur électrique.

7. Véhicule (1) selon la revendication 5 ou 6, **caractérisé en ce que** ledit premier train (2) est le train avant du véhicule (1) et **en ce que** ledit deuxième train (3) est le train arrière du véhicule (1).

## Patentansprüche

1. Verfahren zur Verteilung eines Gesamtsollmoments (Cglobal) zwischen einem ersten Radsatz (2) und einem zweiten Radsatz (3) eines Fahrzeugs (1), wobei das Verfahren darin besteht, in aufeinanderfolgenden Iterationen Folgendes durchzuführen:
- in einem ersten Zweig (20) einen Schritt, der darin besteht, von dem Gesamtdrehmoment (Cglobal) ein optimales Drehmoment (Car_opti) zu subtrahieren (22), das dem zweiten Zug (3) zugeordnet ist, um ein erstes Solldrehmoment (Cav) zu erhalten. auf den ersten Zug (2) anzuwenden;
- in einem zweiten Zweig (30), Schritte bestehend aus:
- Subtrahieren (31) von dem globalen Solldrehmoment (Cglobal) eines geschätzten Drehmoments (Cav_estim), das dem ersten Zug (2) zugeordnet ist, um ein zweites Solldrehmoment (Car) zu erhalten, das auf den zweiten Zug (3) anzuwenden ist, Dann
- Begrenzen (32) des zweiten Solldrehmoments (Car) zwischen einem vordefinierten Mindestdrehmoment (Cmin) und einem vordefinierten Höchstdrehmoment (Cmax);
wobei das Verfahren **dadurch gekennzeichnet ist, dass** der erste Zweig (20) außerdem einen Schritt umfasst, der darin besteht, das optimale Drehmoment (Car_opti) zwischen dem minimalen Drehmoment (Cmin) und dem maximalen Drehmoment (Cmax) zu begrenzen (21), bevor das erste Drehmoment (cav) berechnet wird.

2. Verfahren nach Anspruch 1, **dadurch gekennzeichnet, dass** bei jeder der Iterationen die Schritte des ersten Zweigs (20) vor den Schritten des zweiten Zweigs (30) ausgeführt werden.

3. Verfahren nach Anspruch 1 oder 2, **dadurch gekennzeichnet, dass** jedes der minimalen (Cmin) und maximalen (Cmax) Drehmomente als Funktion des globalen Drehmoments (Cglobal) definiert wird.

4. Verfahren nach Anspruch 3, **dadurch gekennzeichnet, dass** der Wert des minimalen Drehmoments (Cmin) bzw. des maximalen Drehmoments (Cmax), wenn das globale Drehmoment (Cglobal) negativ ist, niedriger ist als der Wert des minimalen Drehmoments (Cmin). bzw. das maximale Drehmoment (Cmax), wenn das globale Drehmoment (Cglobal) positiv ist.

5. Kraftfahrzeug (1), umfassend einen ersten Radsatz (2), der von einem ersten Motor (5) angetrieben wird, und einen zweiten Radsatz (3), der von einem zweiten Motor (7) angetrieben wird, **dadurch gekennzeichnet, dass** es Steuermittel (14) umfasst angepasst, um ein Verfahren nach einem der vorhergehenden Ansprüche umzusetzen.

6. Kraftfahrzeug (1) nach Anspruch 5, **dadurch gekennzeichnet, dass** der erste Motor (5) ein Wärmemotor und der zweite Motor (7) ein Elektromotor ist.

7. Kraftfahrzeug (1) nach Anspruch 5 oder 6, **dadurch gekennzeichnet, dass** die erste Achse (2) die Vorderachse des Fahrzeugs (1) ist und dass die zweite Achse (3) die Hinterachse des Fahrzeugs (1) ist.

## Claims

1. Method for distributing an overall setpoint torque (Cglobal) between a first set of wheels (2) and a second set of wheels (3) of a vehicle (1), the method consisting in carrying out by successive iterations:
- in a first branch (20), a step consisting in subtracting (22) from said overall torque (Cglobal) an optimal torque (Car_opti) associated with said second train (3), so as to obtain a first set torque (Cav) to be applied to said first train (2);
- in a second branch (30), steps consisting of:
- subtracting (31) from said global setpoint torque (Cglobal) an estimated torque (Cav_estim) associated with said first train (2), so as to obtain a second setpoint torque (Car) to be applied to said second train (3), then
- limit (32) said second setpoint torque (Car) between a minimum torque (Cmin) and a maximum torque (Cmax) predefined;
the method being **characterized in that** said first branch (20) further comprises a step consisting in limiting (21) said optimal torque (Car_opti) between said minimum torque (Cmin) and said maximum torque (Cmax) before calculating said first torque (cav).

2. Method according to Claim 1, **characterized in that**, at each of the iterations, the steps of the said first branch (20) are carried out before the steps of the said second branch (30).

3. Method according to Claim 1 or 2, **characterized in that** each of the said minimum (Cmin) and maximum (Cmax) torques is defined as a function of the said global torque (Cglobal).

4. Method according to claim 3, **characterized in that** the value of said minimum torque (Cmin), respectively of said maximum torque (Cmax), when said global torque (Cglobal) is negative, is lower than the value of said minimum torque (Cmin), respectively said maximum torque (Cmax), when said global torque (Cglobal) is positive.

5. Automobile vehicle (1) comprising a first set of wheels (2) driven by a first motor (5) and a second set of wheels (3) driven by a second motor (7), **characterized in that** it comprises means (14) control adapted to implement a method according to any preceding claim.

6. Vehicle (1) according to Claim 5, **characterized in that** the said first motor (5) is a heat engine and **in that** the said second motor (7) is an electric motor.

7. Vehicle (1) according to Claim 5 or 6, **characterized in that** the said first axle (2) is the front axle of the vehicle (1) and **in that** the said second axle (3) is the rear axle of the vehicle (1).
